# EUROPÄISCHE PATENTSCHRIFT

(11) **EP 1 492 217 B1**
(45) Veröffentlichungstag und Bekanntmachung des Hinweises auf die Patenterteilung: **01.10.2008**
(21) Anmeldenummer: 04014531.0
(22) Anmeldetag: 21.06.2004
(51) Int. Cl.: H02K 41/03, H02K 29/08

(54) **Elektrische Maschine**
Linear actuator
Entraînement linéaire

(30) Priorität: 27.06.2003 DE 10329150
(43) Veröffentlichungstag der Anmeldung: 29.12.2004
(73) Patentinhaber: SIEMENS AKTIENGESELLSCHAFT, 80333 München (DE)
(72) Erfinder: Jajtic, Zeliko, Dr., 80993 München (DE); Matscheko, Gerhard, 82319 Starnberg (DE); Schiele, Stefan, 85247 Stetten (DE)

(56) Entgegenhaltungen:
- EP-A- 0 300 126
- EP-A- 1 244 198
- DE-A1- 19 807 085
- US-A- 5 148 069
- PATENT ABSTRACTS OF JAPAN Bd. 009, Nr. 181 (E-331), 26. Juli 1985 (1985-07-26) & JP 60 051448 A (CLARION KK), 22. März 1985 (1985-03-22)
- PATENT ABSTRACTS OF JAPAN Bd. 1997, Nr. 07, 31. Juli 1997 (1997-07-31) & JP 09 084322 A (ALPS ELECTRIC CO LTD), 28. März 1997 (1997-03-28)
- PATENT ABSTRACTS OF JAPAN Bd. 2003, Nr. 12, 5. Dezember 2003 (2003-12-05) & JP 2004 166398 A (FUJI ELECTRIC FA COMPONENTS & SYSTEMS CO LTD), 10. Juni 2004 (2004-06-10)
- PATENT ABSTRACTS OF JAPAN Bd. 007, Nr. 194 (E-195), 24. August 1983 (1983-08-24) & JP 58 095958 A (SHIBAURA SEISAKUSHO:KK), 7. Juni 1983 (1983-06-07)
- PATENT ABSTRACTS OF JAPAN Bd. 009, Nr. 151 (P-367), 26. Juni 1985 (1985-06-26) & JP 60 027915 A (YOKOKAWA HOKUSHIN DENKI KK), 13. Februar 1985 (1985-02-13)

## Beschreibung

Die Erfindung betrifft eine elektrische Maschine, welche einen Stator und einen Rotor aufweist. Bei einer derartigen elektrischen Maschine ist die Lage des Stators bzw. des Rotors zu bestimmen.

Bei elektrischen Maschinen wie z.B. einem Linearmotor oder einem Torquemotor ist es zur Ermittlung der Position bzw. Lage eines Primärteiles bezüglich eines permanenterregten Sekundärteiles nötig einen Encoder bzw. einen entsprechenden Sensor einzusetzen. Dabei ist das Primärteil beispielsweise der Stator und das Sekundärteil beispielsweise der Läufer.

Aus der US 5,091,665 ist ein Hallsensor bekannt, welcher zur Positionsbestimmung heranziehbar ist. Dieser Sensor zur Positionsbestimmung ist ein separates Element des Primärteils

Aus den Dokumenten DE 198 07 085 A1, EP 1 244 198 A1, US 5 148 069, EP 0 300 126 A1 JP 60 051448 A, JP 09 084322 A und JP 2004 166398 A ist jeweils eine elektrische Maschine bekannt, in dessen Stator und/oder Rotor ein Sensor zur Bestimmung des Magnetflusses und/oder der Position integriert ist.

Aufgabe der vorliegenden Erfindung ist es, eine elektrische Maschine anzugeben, bei der eine weitere Möglichkeit besteht, eine Lageidentifikation eines Stators bzw. eines Läufers einer elektrischen Maschine vorzunehmen.

Die Lösung der Aufgabe gelingt durch eine elektrische Maschine mit den Merkmalen nach Anspruch 1 bzw. mit einem Verfahren nach Anspruch 9.

Die elektrische Maschine weist einen Stator und einen Läufer auf, wobei der Stator und/oder der Läufer zumindest ein Mittel zur Führung eines magnetischen Flusses aufweist. Das Mittel zur Führung des magnetischen Flusses weist einen Spalt zur Aufnahme eines Sensors zur Messung des magnetischen Flusses auf. In dem Spalt ist in einfacher und kompakter Weise der Sensor zur Messung des magnetischen Flusses, z.B. ein Hallsensor, anbringbar.

Das Mittel zur Führung des magnetischen Flusses, wie z.B. ein Blechpaket, weist zumindest ein Flussleitstück auf, wobei das Flussleitstück zur Ausbildung des Spaltes dient. Mit Hilfe zumindest eines oder z.B. zweier Flussleitstücke ist von einem magnetischen Hauptfluss ein magnetischer Teilfluss, auch magnetischer Sensorfluss genannt ableitbar, welcher über einen Spalt geführt wird, in welchen ein Sensor insbesondere zur Messung des magnetischen Flusses einsetzbar ist. Der Spalt ist beispielsweise ein Luftspalt oder ein Spalt, der mit einem Füllmittel wie z.B. einem Harz oder einen Kunststoff, gefüllt ist bzw. füllbar ist.

Der Spalt, der in seiner Gestalt unterschiedlich ausführbar ist, jedoch stets zumindest zwei einander gegenüberliegende Elemente aufweist, ist in verschiedenster Weise in das Mittel zur Führung des magnetischen Flusses integrierbar. Dies führt zu einer bauraumoptimalen Integration des Sensors in das Mittel zur Führung des magnetischen Flusses. In vorteilhafter Weise ist trotz Ausbildung des Spaltes die elektrische Maschine in ihrer geometrischen Ausdehnung unverändert und insbesondere nicht vergrößert.

In einer vorteilhaften Ausgestaltung der elektrischen Maschine weist das Mittel zur Führung des magnetischen Flusses im Bereich des Flussleitstückes bzw. im Bereich der Flussleitstücke eine Aussparung auf. Mit Hilfe einer derartigen Aussparung ist die Aufteilung des magnetischen Hauptflusses bzw. die Abspaltung eines magnetischen Sensorflusses regulierbar. Da durch das Flussleitstück der magnetische Fluss beeinflusst wird, bzw. beeinflussbar ist, ist durch eine in ihrer Größe bestimmbare Aussparung der magnetische Fluss derart einstellbar, dass dieser von einem Flussleitstück im Vergleich zu einem Bereich ohne Flussleitstück unbeeinflusst ist.

Das Mittel zur Führung des magnetischen Flusses ist beispielsweise ein Blechpaket oder zumindest ein eisenhaltiger Werkstoff. Ein Beispiel für einen derartigen eisenhaltigen Werkstoff ist eine Spritzgussmasse, welche in einem Füllmaterial z.B. Eisenpartikel z.B. in Form von Eisenkügelchen aufweist. Sowohl der Stator als auch der Läufer der elektrischen Maschine sind derart ausbildbar, dass diese ein Blechpaket aufweisen.

Die elektrische Maschine ist beispielsweise auch derart ausgestaltbar bzw. ausgestaltet, dass sowohl der Stator als auch der Läufer der elektrischen Maschine Wicklungen aufweist. In einer weiteren vorteilhaften Ausgestaltung der elektrischen Maschine weist der Stator Wicklungen und der Läufer Permanentmagnete auf. Da durch Permanentmagnete stetig ein Magnetfeld vorherrscht, ist durch einen Sensor ein derartiges Magnetfeld stets feststellbar und durch die Messung des Magnetfeldes ist die Positionierung des Stators bzw. des Läufers der elektrischen Maschine durch eine entsprechende an den Sensor angeschlossene Einrichtung feststellbar. Eine derartige Einrichtung ist beispielsweise in der Steuerung oder Regelung der elektrischen Maschine bzw. in einem zugeordneten Stromrichter realisierbar.

Die elektrische Maschine ist beispielsweise eine Linearmaschine, wobei entweder ein Primärteil oder ein Sekundärteil der Linearmaschine zur Durchführung einer Linearbewegung vorgesehen ist.

Ein weiteres Beispiel einer erfindungsgemäßen elektrischen Maschine ist eine rotatorische Maschine, wobei der Läufer entweder ein Innenläufer oder ein Außenläufer ist. Ein Torquemotor ist ein Beispiel für eine rotatorische Maschine.

Die erfindungsgemäße elektrische Maschine weist in einer vorteilhaften Ausgestaltung den Sensor zur Lagebestimmung des Stators bzw. des Läufers auf. Der Sensor ist mit einer entsprechenden Auswerteeinrichtung zur Lagebestimmung verbindbar bzw. verbunden.

Vorteile der Erfindung ergeben sich insbesondere bei permanenterregten Maschinen.

Für den Anlauf von permanenterregten Maschinen ist es notwendig, die absolute Rotorlage zu erkennen. Die Rotorlageerkennung bezieht sich auf die Kommutierungslage, also die 360° elektrisch. Dafür ist im allgemeinen ein Absolut-Encoder erforderlich. Für den Betrieb der elektrischen Maschine ist ein relativer Encoder ausreichend bzw. üblicherweise eingesetzt.

Die absolute Rotorlageerkennung, also die Erkennung der Kommutierungslage des Rotors, wurde bisher durch separate Sensoren, die außerhalb des magnetischen Kreises der Maschine angeordnet sind, erfasst bzw. durch softwarebasierende Verfahren ermittelt. Ein Beispiel hierfür ist ein Linearmotor, welcher Hallsensoren in einer separaten Box außerhalb des Primärteilgehäuses aufweist. Die Auswertung des Streuflusses der Permanentmagnete in der Luft ermöglicht dabei die Positionsbestimmung. Bei einem Torque-Motor ist die Lageerkennung beispielsweise über eine eigene Geberspur möglich. Durch die erfindungsgemäße integrierte Rotorlageerkennung wird die anfängliche Kommutierungslage und Initialisierung eines relativen Encoders erreicht. Es entfallen zusätzliche Einrichtungen bzw. Verfahren zum Erkennen der Rotorlage. Insbesondere ergibt sich dann ein Vorteil, wenn andere Verfahren nicht möglich sind.

Die integrierte Rotorlageerkennung ersetzt die Hall-Sensor-Box bei Linearmotoren. Dadurch ist kein zusätzlicher Bauraum innerhalb des Einbauraumes (z.B. Schlitten einer Werkzeugmaschine) erforderlich. Es entfällt dadurch auch die genaue Justage der Montageposition zwischen der Hall-Sensor-Box und dem Primärteil. Eine Hall-Sensor-Box kann bei Torque-Motoren nicht eingesetzt werden, da keine freistehenden Magnete vorhanden sind. Eine integrierte Rotorlageerkennung erweitert die Funktion des Torque-Motors durch eine Gewährung des sicheren Anlaufs unter Last oder in Fällen, wo die so genannte bewegungsbasierenden Rotorlageerkennungsverfahren nicht realisierbar sind. Dies trifft beispielsweise zu, wenn eine Initialisierungsbewegung der Maschine aufgrund von Einschränkungen nicht möglich oder zulässig ist. Die integrierte Rotorlageerkennung stellt bei Torque-Motoren eine einfache und kostengünstige technische Lösung dar.

In einer vorteilhaften Ausgestaltung erfolgt eine Auswertung des Signals des Sensors zur Messung des magnetischen Flusses im Betrieb unter Kompensation der Signaleinflüsse durch eine Statorbestromung. Damit ist es möglich, auch während des Betriebes einer elektrischen Maschine die Kommutierungslage zu bestimmen. Als Statorströme sind Istwerte bzw. Sollwerte eines oder mehrerer bzw. aller elektrischen Statorströme zu verstehen. Damit lassen sich z.B. geberlose Antriebe durch die Erfassung der zusätzlichen Größe "magnetischer Fluss" verbessern und Diagnosesysteme aufbauen. Beispiele hierfür sind Beobachter bzw. Motormodelle.

Eine oder mehrere Sensorelemente wie z.B. ein Hall-Sensor sind also erfindungsgemäß an einer geeigneten Position in den magnetischen Kreis der elektrischen Maschine integriert. Damit erfolgt die Signalgewinnung z.B. aufgrund des magnetischen Hauptflusses, z.B. durch den Erregerfluss der Permanentmagnete im Primärteil bzw. Stator der elektrischen Maschine. Durch Signalauswertung wird die für die Kommutierung erforderliche Rotorlage ermittelt und z.B. eine Inkremental-Encoder initialisiert. Damit ist als Funktion die Erkennung der Kommutierungslage für einen definierten Anlauf der elektrischen Maschine erreichbar.

In einer weiteren vorteilhaften Ausgestaltung der elektrischen Maschine weist bei einer permanenterregten Maschine der Teil der elektrischen Maschine, welche die Permanentmagnete trägt den Spalt für einen Sensor auf. Aus der Magnetfeldstärke bzw. deren Änderung ist eine datentechnische Ermittlung der Position bzw. der Geschwindigkeit des bewegten Motorteils erzielbar. Bei permanenterregten elektrischen Maschinen, die aneinander gereihte Permanentmagnete aufweisen, wird dabei vorteilhaft das Magnetfeld der Permanentmagnete zur Positionsfeststellung ermittelt.

Die elektrische Maschine ist derart ausbildbar, dass die Magnetfeldstärke lokal an mehreren jedoch zumindest zwei Punkten ermittelbar ist. Diese Punkte sind in Bewegungsrichtung des Motorteils voneinander beabstandet, wobei die Abstände zwischen den einzelnen Punkten sich von den Abständen der Permanentmagneten sich in einer vorteilhaften Ausführung unterscheiden können. Auf diese Weise ergeben sich an den einzelnen Messpunkten unterschiedliche Phasen des Messsignals, was zur Erhöhung der Genauigkeit der Positionsbestimmung ausgenutzt werden kann. Dementsprechend sind bei einer erfindungsgemäßen Vorrichtung mehrere Sensoren vorsehbar, wobei die Sensoren vorzugsweise den Spulen eines Primärteils zugeordnet sind.

In einer vorteilhaften Ausgestaltung ist der Sensor durch eine aktive Kühleinrichtung des Primärteils kühlbar. Diese erhöht die Genauigkeit des Sensors bzw. sind dadurch günstigere Sensoren einsetzbar, die keine höheren Ansprüche an die Umgebungstemperatur stellen.

Ausführungsbeispiele der Erfindung sind anhand der beigefügten Zeichnungen erläutert. Es zeigen:
- FIG 1: eine Prinzipdarstellung eines Primärteiles und eines Sekundärteiles eines Linearmotors,
- FIG 2: eine Ausführungsvariante eines Blechpaketes eines Primärteiles,
- FIG 3: ein Ausführungsbeispiel eines Blechpaketes des Primärteils eines Linearmotors, gemäß der Stand der Technik,
- FIG 4: eine weitere Prinzipdarstellung des Linearmotors, wobei ein Spalt zur Aufnahme eines Sensors im Sekundärteil vorgesehen ist und
- FIG 5: einen weiteren Blechschnitt.

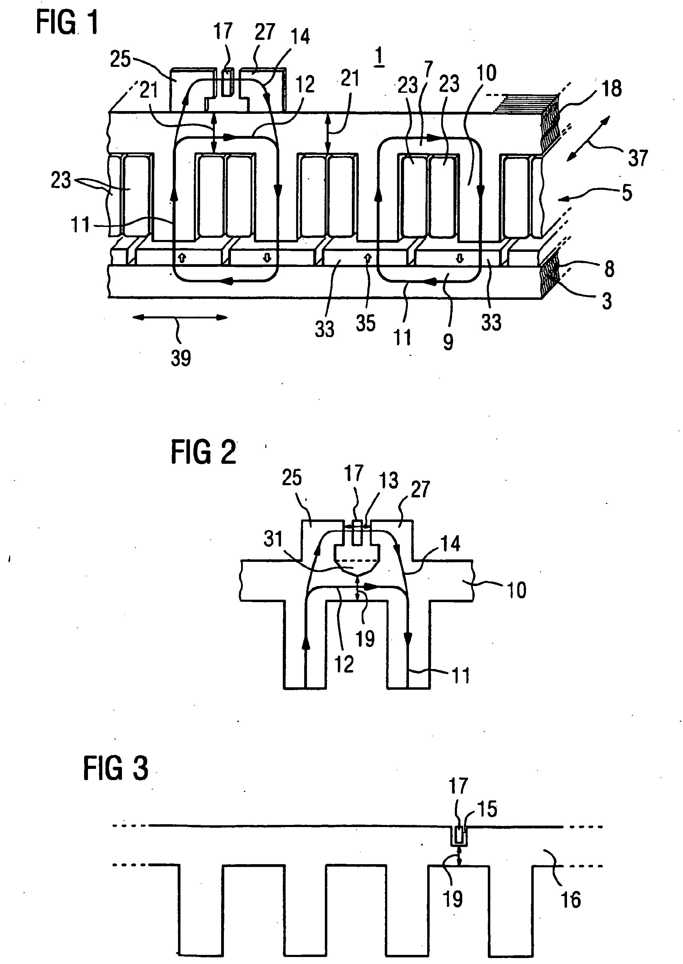

Die Darstellung gemäß FIG 1 zeigt schematisch eine elektrische Maschine 1, welche einen Stator 3 als Sekundärteil und einen Läufer 5 als Primärteil aufweist, wobei der Stator 3 ein Mittel zur Führung eines magnetischen Flusses 11 - in der Figur als Feldlinien dargestellt - z.B. in Form eines Blechpaketes 8 aufweist. Auch der Läufer 5 weist in seinem Aufbau ein Blechpaket 18 auf. Die dargestellte elektrische Maschine 1 zeigt prinzipiell den Aufbau eines Linearmotors. Das Blechpaket 18 des Läufers 5 weist Zähne 10 auf. Zwischen den Zähnen 10 des Blechpaketes 18 sind Wicklungen 23 angeordnet. Der Stator 3 der als Linearmaschine, d.h. Linearmotor, ausgeführten elektrischen Maschine 1 weist Permanentmagnete 33, deren magnetische Flussausrichtung durch einen Pfeil 35 angegeben ist, auf. Im Bereich der Flussleitstücke 25, 27 teilt sich der magnetische Fluss 11 in einen magnetischen Hauptfluss 12 und einen magnetischen Sensorfluss 14. Der magnetische Hauptfluss 12 verläuft über einen Querschnitt 21 des Blechpaketes 18. Ein Sensor 17 befindet sich in einem Spalt 13, über welchen der Sensorfluss 14 führbar ist. Das Blechpaket 18 weist eine Längsausdehnung 39 und eine Querausdehnung 37 auf. Die Längsausdehnung 39 gibt auch die Bewegungsrichtung des Läufers 5 der als Linearmotor ausgebildeten elektrischen Maschine 1 an. Das Flussleitstück 25, 27 erstreckt sich beispielsweise über die gesamte Querausdehnung 37 des Blechpaketes 18 oder nur über einen Teil der Querausdehnung 37 des Blechpaketes 18. In einer vorteilhaften Ausgestaltung befindet sich das Flussleitstück 25, 27 in einem mittleren Bereich der Querausdehnung 37.

Die Darstellung gemäß FIG 2 zeigt eine Ausführungsvariante eines Blechschnittes 10 mit einer Ausführungsvariante des Spaltes 13, wobei durch eine Aussparung 31 im Blechschnitt 10 eine Anpassung der Signalamplitude des Sensors 17 möglich ist. Die Aussparung 31 reduziert den Querschnitt 19 für einen magnetischen Hauptfluss 12. Auch eine Vergrößerung des Querschnitts 19 gegenüber Bereich ohne Flussleitstück 25, 27 ist ausführbar, jedoch nicht dargestellt.

Die Darstellung gemäß FIG 3 zeigt eine bauraumoptimale Ausführung der Positionierung des Spaltes 15 gemäß der Stand der Technik. Der Spalt 15 ist in den Blechschnitt 16 integriert, wobei durch den Spalt 15 der Querschnitt 19 reduziert ist und die äußeren Abmessungen des Blechschnitts 16 im Bereich eines Spaltes 15 unverändert sind gegenüber der äußeren Abmessungen in einem Bereich des Blechschnitts 16 ohne Spalt.

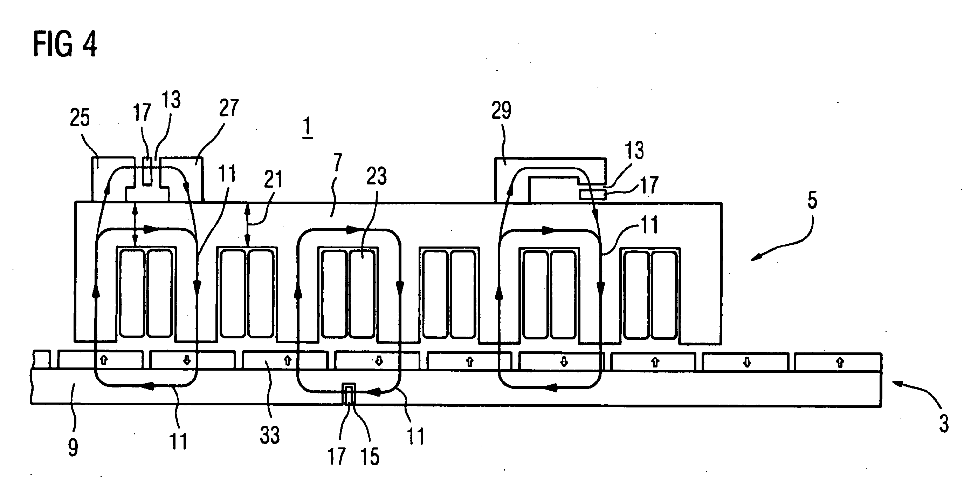

Die Darstellung gemäß FIG 4 zeigt, dass eine elektrische Maschine 1 auch zwei Spalte 13 bzw. Sensoren 17 aufweisen kann, wobei ein Spalt 13 gemäß FIG 1 ausgeführt ist und ein Spalt 13 durch ein Flussleitstück 29 derart ausgebildet ist, dass zur Ausbildung dieses Spaltes 13 lediglich ein Flussleitstück 29 notwendig ist. Die Darstellung gemäß FIG 4 zeigt auch, dass durch einen Spalt 15 der magnetische Fluss 11 auch im Bereich des Stators 3 messbar ist.

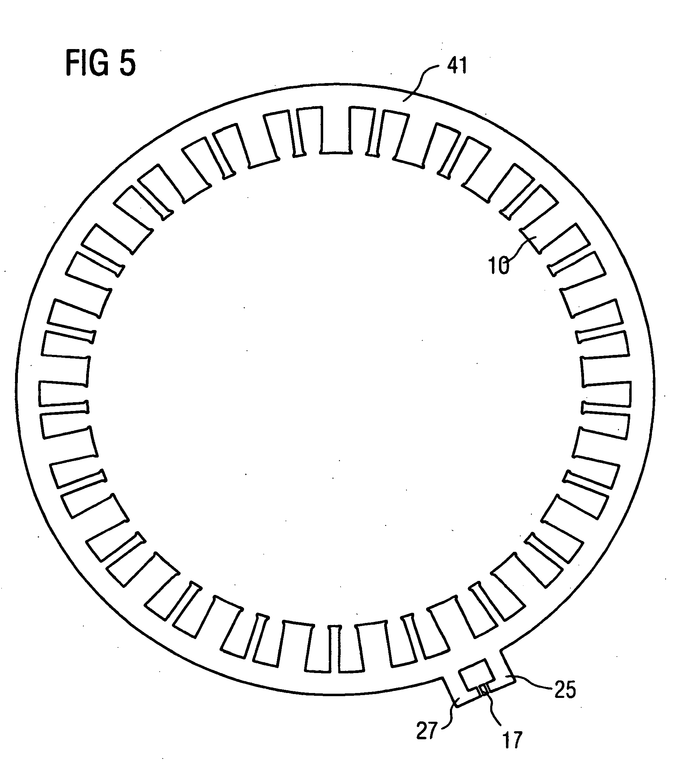

Die Darstellung gemäß FIG 5 zeigt den Blechschnitt 41 eines Stators einer rotatorischen Maschine, welche Zähne 10 aufweist. Diese Darstellung dient als Hinweis darauf, dass der erfindungsgemäße Spalt zur Aufnahme eines Sensors 17 sowohl bei Linearmaschinen als auch bei rotatorischen Maschinen ausführbar ist.

## Patentansprüche

1. Elektrische Maschine (1,2) welche einen Stator (3) und einen Läufer (5) aufweist, wobei der Stator (3) und/oder der Läufer (5) ein Mittel (7,9) zur Führung eines magnetischen Flusses (11) aufweist, wobei das Mittel (7, 9) einen Spalt (13,15) zur Aufnahme eines Sensors (17) zur Messung des magnetischen Flusses (11) aufweist, und das Mittel (7, 9) zur Führung des magnetischen Flusses (11) eine äußere Oberfläche und zumindest ein Flussleitstück (25,27,29) aufweist, wobei das Flussleitstück (25,27,29) zur Ausbildung des Spaltes (13,15) dient, wobei sich im Bereich des Flussleitstückes (25,27,29) der magnetische Fluss (11) in einen magnetischen Hauptfluss (12) und einen magnetischen Sensorfluss (14) teilt und der magnetische Hauptfluss (12) über einen Querschnitt (21) des Mittels (7, 9) verläuft, **dadurch gekennzeichnet, dass**:
- das Flussleitstück (25,27,29) außerhalb der äußeren Oberfläche des Mittels (7,9) angeordnet ist, damit die äußeren Abmessungen des Mittels (7,9) im Bereich des Spaltes (13) vergrößert sind gegenüber **den** äußeren Abmessungen in einem Bereich des Mittels (7,9) ohne Spalt (13) und dass
- der magnetische Sensorfluss (14) über das Flussleitstück (25,27,29) verläuft.

2. Elektrische Maschine (1,2) nach Anspruch 1, **dadurch gekennzeichnet, dass** beim Flussleitstück (25,27,29) eine Aussparung (31) am Mittel (7,9) zur Führung des magnetischen Flusses (11) vorgesehen ist.

3. Elektrische Maschine (1,2) nach einem der vorgenannten Ansprüche, **dadurch gekennzeichnet, dass** das Mittel (7,9) zur Führung des magnetischen Flusses (11) ein Blechpaket ist bzw. zumindest einen eisenhaltigen Werkstoff aufweist.

4. Elektrische Maschine (1,2) nach einem der vorgenannten Ansprüche, **dadurch gekennzeichnet, dass**:
a) der Stator (3) und der Läufer (5) Wicklungen (23) aufweisen, oder dass
b) der Stator (3) Wicklungen (23) aufweist und der Läufer (5) Permanentmagnete (33).

5. Elektrische Maschine (1,2) nach einem der **vorgenannten** Ansprüche, **dadurch gekennzeichnet, dass** die elektrische Maschine **(1,2)** eine Linearmaschine **(1)** ist, wobei entweder der Stator **(3)** oder der Läufer **(5)** zur Durchführung einer Linearbewegung vorgesehen ist.

6. Elektrische Maschine (1,2) nach einem der Ansprüche 1 bis **4, dadurch gekennzeichnet, dass** die elektrische Maschine **(1,2)** eine rotatorische Maschine ist und der Läufer entweder ein Innenläufer oder ein Außenläufer ist.

7. Elektrische Maschine (1,2) nach einem der Ansprüche 1 bis **4, dadurch gekennzeichnet, dass** die elektrische Maschine **(1,2)** ein Torquemotor ist.

8. Elektrische Maschine (1,2) nach einem der vorgenannten Ansprüche, **dadurch gekennzeichnet, dass** diese den Sensor **(17)** zur Lagebestimmung des Stators **(3)** bzw. des **Läufers (5)** aufweist.

9. Verfahren zum Betrieb einer elektrischen Maschine (1,2) nach einem der Ansprüche 1 bis **8**, **dadurch gekennzeichnet, dass ein** Signal des Sensors **(17)** zur Messung des magnetischen Flusses **(11)** und Istwerte bzw. Sollwerte eines oder mehrerer bzw. aller Statorströme zur Bestimmung **einer** Kommutierungslage der elektrischen Maschine **(1,2)** verwendet werden.

10. Verfahren gemäß Anspruch 9 zum Betrieb einer elektrischen Maschine (1,2) nach einem der Ansprüche **1** bis **8,** wobei die elektrische Maschine (1, 2) einen Inkremental-Encoder aufweist, und die Kommutierunglage des Stators **(3)** bzw. des Läufers **(5)** ermittelt wird, wonach der Inkremental-Encoder initialisiert wird.

## Claims

1. Electric machine (1,2) which has a stator (3) and a rotor (5), wherein the stator (3) and/or the rotor (5) have/has a means (7,9) for guiding a magnetic flux (11), wherein the means (7,9) has a gap (13,15) for accommodating a sensor (17) for measuring the magnetic flux (11), and the means (7,9) for guiding the magnetic flux (11) has an outer surface and at least one flux conductor (25,27,29), wherein the flux conductor (25,27,29) serves for embodying the gap (13,15), wherein the magnetic flux (11) splits in the area of the flux conductor (25,27,29) into a magnetic main flux (12) and a magnetic sensor flux (14) and the magnetic main flux (12) runs via a cross-section (21) of the means (7,9), **characterised in that**:
- the flux conductor (25,27,29) is disposed outside of the outer surface of the means (7,9) so that the external dimensions of the means (7,9) are larger in the area of the gap (13) than the outer dimensions in an area of the means (7,9) without gap (13) and that
- the magnetic sensor flux (14) runs via the flux conductor (25,27,29) .

2. Electric machine (1,2) according to claim 1, **characterised in that** in the case of the flux conductor (25,27,29) a recess (31) is provided on the means (7,9) for guiding the magnetic flux (11).

3. Electric machine (1,2) according to one of the preceding claims, **characterised in that** the means (7,9) for guiding the magnetic flux (11) is a laminated core or includes at least one ferrous material.

4. Electric machine (1,2) according to one of the preceding claims, **characterised in that**:
a) the stator (3) and the rotor (5) have windings (23) or that
b) the stator (3) has windings (23) and the rotor (5) permanent magnets (33).

5. Electric machine (1,2) according to one of the preceding claims, **characterised in that** the electric machine (1,2) is a linear machine (1), wherein either the stator (3) or the rotor (5) is provided for executing a linear movement.

6. Electric machine (1,2) according to one of claims 1 to 4, **characterised in that** the electric machine (1,2) is a rotary machine (1) and the rotor is either an inside rotor or an outside rotor.

7. Electric machine (1,2) according to one of claims 1 to 4, **characterised in that** the electric machine (1,2) is a torque motor.

8. Electric machine (1,2) according to one of the preceding claims, **characterised in that** said electric machine (1,2) has the sensor (17) for determining the position of the stator (3) or rotor (5).

9. Method for operating an electric machine (1,2) according to one of claims 1 to 8, **characterised in that** a signal of the sensor (17) is used for measuring the magnetic flux (11) and actual values or target values of one or more or all of the stator currents are used for determining a commutation position of the electric machine (1,2).

10. Method according to claim 9 for operating an electric machine (1,2) according to one of claims 1 to 8, wherein the electric machine (1,2) has an incremental encoder and the commutation position of the stator (3) or rotor (5) is determined, whereupon the incremental encoder is initialized.

## Revendications

1. Moteur ( 1, 2 ) électrique qui a un stator ( 3 ) et un rotor ( 5 ), le stator ( 3 ) et/ou le rotor ( 5 ) ayant un moyen ( 7, 9 ) de guidage d'un flux ( 11 ) magnétique, le moyen ( 7, 9 ) ayant une fente ( 13, 15 ) de réception d'un capteur ( 17 ) de mesure du flux ( 11 ) magnétique et le moyen ( 7, 9 ) ayant une surface extérieure et au moins une pièce ( 25, 27, 29 ) de guidage de flux pour guider le flux ( 11 ) magnétique, la pièce ( 25, 27, 29 ) de guidage de flux servant à former la fente ( 13, 15 ), le flux magnétique se subdivisant dans la partie de la pièce ( 25, 27, 29 ) de guidage de flux en un flux ( 12 ) magnétique principal et en un flux ( 14 ) magnétique de capteur et le flux ( 12 ) magnétique principal s'étendant sur une section ( 21 ) transversale du moyen ( 7, 9 ), **caractérisé en ce que**
- la pièce ( 25, 27, 29 ) de guidage de flux est disposée à l'extérieur de la surface extérieure du moyen ( 7, 9 ) afin que les dimensions extérieures du moyen ( 7, 9 ) soient agrandies dans la partie de la fente ( 13 ) par rapport aux dimensions extérieures dans une partie du moyen ( 7, 9 ) n'ayant pas la fente ( 13 ) et **en ce que**
- le flux ( 14 ) magnétique de capteur s'étend sur la pièce ( 25, 27, 29 ) de guidage de flux.

2. Moteur (1, 2) électrique suivant la revendication 1, **caractérisé en ce que** pour la pièce (25, 27, 29) de guidage de flux il est prévu un évidemment (31) dans le moyen (7, 9) de guidage d'un flux (11) magnétique.

3. Moteur (1, 2) électrique suivant l'une des revendications précédentes, **caractérisé en ce que** le moyen (7, 9) de guidage d'un flux (11) magnétique est un paquet de tôles ou a au moins un matériau contenant du fer.

4. Moteur (1, 2) électrique suivant l'une des revendications précédentes, **caractérisé en ce que** :
a) le stator (3) et le rotor (5) ont des enroulements, ou **en ce que**
b) le stator (3) a des enroulements et le rotor (5) a des aimants (33) permanents.

5. Moteur (1, 2) électrique suivant l'une des revendications précédentes, **caractérisé en ce que** le moteur (1, 2) électrique est un moteur (1) linéaire, le stator le moteur (1, 2) électrique est un moteur (1) linéaire, le stator (3) ou le rotor (5) étant prévu pour effectuer un mouvement linéaire.

6. Moteur (1, 2) électrique suivant l'une des revendications 1 à 4, **caractérisé en ce que** le moteur (1, 2) électrique est un moteur tournant et le rotor est un rotor intérieur ou un rotor extérieur.

7. Moteur (1, 2) électrique suivant l'une des revendications 1 à 4, **caractérisé en ce que** le moteur (1, 2) électrique est un moteur couple.

8. Moteur (1, 2) électrique suivant l'une des revendications précédentes, **caractérisé en ce qu'**il a le capteur (17) de détermination de la position du stator (3) ou du rotor (5).

9. Procédé pour faire fonctionner un moteur (1, 2) électrique suivant l'une des revendications 1 à 8, **caractérisé en ce que** on utilise un signal du capteur (17) pour mesurer le flux magnétique et des valeurs réelles ou des valeurs de consigne d'un ou de plusieurs ou de tous les courants statoriques pour la détermination d'une position de commutation du moteur (1, 2) électrique.

10. Procédé suivant la revendication 9, pour faire fonctionner un moteur (1, 2) électrique selon l'une des revendications 1 à 8, dans lequel le moteur (1, 2) électrique a un codeur par incrément et on détermine la position du stator (3) ou du rotor (5), après quoi le codeur par incrément est initialisé.
